# FASCICULE DE BREVET EUROPEEN

(11) **EP 0 662 413 B1**
(45) Date de publication et mention de la délivrance du brevet: **08.10.1997**
(21) Numéro de dépôt: 95400008.9
(22) Date de dépôt: 03.01.1995
(51) Int. Cl.: B62D 1/19

(54) **Dispositif d'absorption d'énergie pour colonne de direction de véhicule automobile**
Energieabsorbierende Einrichtung für eine Kraftfahrzeuglenksäule
Energy absorbing device for a steering column of a motor vehicle

(30) Priorité: 06.01.1994 FR 9400087
(43) Date de publication de la demande: 12.07.1995
(73) Titulaire: NACAM, F-41100 Vendôme (FR)
(72) Inventeur: Fouquet, Jean-Michel, F-41100 Vendome (FR); Duval, Benoît, F-41100 Vendome (FR)
(74) Mandataire: Phélip, Bruno

(56) Documents cités:
- EP-A- 0 424 629
- EP-A- 0 557 767
- DE-C- 4 118 863
- GB-A- 2 116 496

## Description

La présente invention se rapporte à un dispositif d'absorption d'énergie pour colonne de direction de véhicule automobile réglable en profondeur et/ou en inclinaison, dont l'arbre de direction est monté dans un tube-corps, qui est supporté et bloqué sur la carrosserie à la position voulue.

On connaît de nombreux dispositifs d'absorption d'énergie, qui s'adaptent sur des directions de véhicule automobile non réglables en profondeur et/ou en inclinaison. Le problème est plus délicat avec des directions réglables soit en profondeur, soit en inclinaison, soit dans les deux directions. De plus, les dispositifs connus ne permettent pas d'absorber un effort prédéterminé de valeur constante, quelle que soit la position de réglage. Enfin, lors d'un choc, ces dispositifs ne maintiennent pas la colonne de direction dans le réglage angulaire qu'elle avait avant le choc.

Le document GB-A-2.268.125 décrit un dispositif d'absorption d'énergie pour colonne de direction de véhicule du type défini dans le préambule de la revendication 1. Ce dispositif comprend un organe relié à la colonne de direction, une goupille s'étendant à travers une fente de cet organe et un système de bandes limitant le mouvement relatif entre l'organe et la goupille en cas de choc.

Le but de la présente invention est de proposer un système d'absorption d'énergie de colonne de direction de véhicule réglable en profondeur et/ou en inclinaison, qui permet d'absorber un effort prédéterminé appliqué au point volant du conducteur, et cela quelle que soit la position de réglage, tout en maintenant la colonne de direction dans le réglage angulaire qu'elle avait avant le choc.

Selon l'invention le dispositif d'absorption d'énergie s'adapte à une colonne de direction de véhicule automobile réglable en profondeur, dont l'arbre de direction est monté dans un tube-corps qui est supporté et bloqué sur la carrosserie à la position voulue.

Ce dispositif est défini à la revendication 1.

L'invention concerne aussi les modes de réalisation définis aux revendications 2 à 27.

Dans un mode de réalisation particulier, le montage de l'arbre de direction dans le tube-corps est réalisé de manière connue par l'intermédiaire d'un carré-renfort, auquel cas le système de blocage du tube-corps dans le support comprend avantageusement:
- une vis de serrage traversant deux pattes de serrage aménagées sur chacun des montants du support, et les deux montants du carré-renfort appartenant au tube-corps,
- deux écrous à pas inversé, montés sur chaque extrémité de la vis de serrage à l'extérieur de chacune des pattes de serrage respectives, par rapport auxquelles ils sont bloqués en rotation,
- un organe de manoeuvre monté à l'une des extrémités de la vis de serrage,
- de manière qu'en tournant l'organe de manoeuvre dans le sens voulu, autour de l'axe de blocage, on assure le blocage désiré.

Afin de tirer le meilleur parti de cette architecture, le système de réglage en profondeur est constitué par une lumière aménagée dans chacun des montants du carré-renfort, chaque lumière étant sensiblement parallèle à l'axe de la colonne de direction et d'une largeur légèrement plus grande que le diamètre de la vis de serrage, de manière qu'elle puisse traverser et coulisser facilement dans chacune de ces lumières.

Préférentiellement, le système de réglage en inclinaison est constitué par une lumière aménagée dans chacune des pattes du support dans une direction légèrement inclinée par rapport à la perpendiculaire à l'axe de la colonne de direction, et d'une largeur légèrement plus grande que le carré de chacun des écrous correspondants, de manière que la vis de serrage puisse coulisser avec ses écrous dans chacune de ces lumières, tout en assurant le blocage en rotation des écrous.

Dans un autre mode de réalisation, le système de réglage en profondeur est constitué par une lumière aménagée dans chacune des pattes du support, et d'une largeur légèrement plus grande que le carré de chacun des écrous correspondants, de manière que la vis de serrage puisse coulisser avec ses écrous dans chacune de ces lumières tout en assurant le blocage en rotation des écrous.

Dans un autre mode de réalisation, le système de réglage en inclinaison est constitué par une lumière aménagée dans chacun des montants du carré-renfort, et d'une largeur légèrement plus grande que le diamètre de la vis de serrage, de manière que cette dernière puisse traverser et coulisser facilement dans chacune de ces lumières.

Selon différentes variantes de l'invention, le système d'amortissement peut être monté soit à l'extérieur du support, soit à l'intérieur du support. De plus, le système d'amortissement peut être choisi pour travailler soit en traction, soit en compression.

Dans un mode particulièrement intéressant de réalisation de l'invention, le système d'amortissement est un amortisseur hydraulique. Avantageusement dans ce type de réalisation:
- l'amortisseur hydraulique travaille à la traction et est disposé à l'extérieur du support,
- le corps de l'amortisseur est relié à l'extrémité du tube-corps située à l'opposé du volant du conducteur,
- la tige du piston de l'amortisseur est reliée à l'organe de manoeuvre par l'élément intermédiaire constitué par une biellette d'une part solidaire de l'organe de manoeuvre, et d'autre part s'articulant à l'extrémité de la tige du piston par une articulation, la distance entre l'articulation et l'axe de blocage constituant un levier autour de l'axe de blocage, qui agit dans le même sens que l'organe de manoeuvre, de manière à fournir le serrage additionnel.

Dans ce dernier genre de réalisation de l'invention, il est particulièrement intéressant que l'amortisseur hydraulique soit relié au tube-corps au moyen d'une articulation du type chape. De la même manière, l'articulation de l'extrémité de la tige du piston avec la biellette de l'organe de manoeuvre est une chape.

Dans une variante de réalisation de l'invention, une plaque est montée de chaque côté du tube-corps avec lequel elle est solidaire, chacune de ces plaques étant disposée en lieu et place du tube-corps.

L'absorption d'énergie due à un choc sur une colonne de direction de véhicule réglable en profondeur, dont l'arbre de direction est monté dans un tube-corps supporté et bloqué sur la carrosserie à la position voulue, se déroule, selon l'invention, suivant les phases ci-après:
- induction, sous l'effet du choc, d'un effort suivant l'axe de direction avec une vitesse importante,
- glissement du tube-corps dans le support lié à la carrosserie, sous l'action de l'effort par l'intermédiaire du système de réglage en profondeur coopérant avec le système de blocage du tube-corps dans le support,
- déplacement du système d'amortissement relié à une extrémité du tube-corps, qui effectue le glissement, et, à l'autre extrémité, à l'organe de manoeuvre du système de blocage agissant par rotation autour de l'axe de blocage,
- rotation de l'organe de manoeuvre qui tourne dans le sens du blocage du fait du déplacement du système d'amortissement durant la fin de la course de réglage en profondeur, l'entre-axe des extrémités du système d'amortissement restant alors sensiblement constant,
- lorsque la force d'impact dépasse l'effort à absorber par le système d'amortissement, celui-ci effectue alors le parcours complet de la course d'absorption d'énergie.

Si le véhicule est équipé d'un moyen du type sac se gonflant instantanément lors du choc, connu sous le nom de "air-bag", l'effort exercé par le corps du conducteur sur le volant de direction est transmis par l'air-bag.

Dans un autre mode de réalisation de l'invention:
- l'amortisseur hydraulique travaille à la compression et est disposé à l'extérieur du support,
- le corps de l'amortisseur est supporté par le tube-corps du côté du volant du conducteur,
- la tige du piston de l'amortisseur est reliée à l'organe de manoeuvre par une biellette, d'une part solidaire de l'organe de manoeuvre, et d'autre part s'articulant à l'extrémité de la tige du piston par une articulation, la distance entre l'articulation et l'axe de blocage constituant un levier autour de l'axe de blocage, qui agit dans le même sens que l'organe de manoeuvre, de manière à fournir le serrage additionnel.

Dans un autre mode de réalisation de l'invention:
- le système de blocage du tube-corps dans le support est constitué par une tige de serrage traversant les deux pattes de serrage aménagées sur chacun des montants du support,
- un système à came est monté à l'extérieur de l'un des montants, à l'extrémité de la tige de serrage,
- un moyen de tenue axiale est monté à l'extérieur de l'autre montant sur l'autre extrémité de la tige de serrage,
- un organe de manoeuvre est monté sur le système à came,
- de manière qu'en tournant l'organe de manoeuvre dans le sens voulu, autour de l'axe de blocage, on assure par le système à came le blocage désiré.

Dans ce mode de réalisation, le système de serrage additionnel peut être un système à came, qui est monté à l'extérieur du montant et tenu par un écrou.

Dans une autre variante de l'invention,
- l'amortisseur hydraulique travaille à la traction et est disposé à l'intérieur du support,
- le corps de l'amortisseur est relié à l'extrémité du tube-corps située à l'opposé du volant du conducteur,
- la tige du piston de l'amortisseur est munie à son extrémité d'un trou de passage d'une pièce montée dans chacune des pattes de serrage, ladite pièce portant à chacune de ses extrémités filetées, un écrou de blocage de la tige, ladite pièce constituant l'élément intermédiaire, qui en cas de choc donne le serrage additionnel par sa déformation de flexion, qui rapproche les pattes de serrage l'une de l'autre.

Dans un autre mode de réalisation, le dispositif de l'invention peut comporter un dispositif de maintien en position du tube-corps qui est constitué par deux V de serrage disposés chacun entre l'un des montants et le tube-corps, avec les deux faces du V s'appliquant contre le tube-corps, de manière que lors du réglage en profondeur ou en inclinaison, chacun des V suive le mouvement du tube-corps en glissant le long de la paroi d'appui de la patte de serrage correspondante.

Avantageusement dans cette variante de réalisation, il est prévu un système de guidage angulaire de chacun des V de serrage dans le montant correspondant. Ce système de guidage angulaire consiste en un téton porté par la face externe de chacun des V de serrage, qui pénètre et coulisse dans une fente aménagée dans la patte de serrage correspondante. Chacune des fentes est inclinée par rapport à l'axe de la colonne de direction de manière à être sensiblement parallèle à la trajectoire du corps du conducteur lors d'un choc. La forme et l'inclinaison des fentes peuvent être choisies après des essais de choc pratiqués sur des mannequins.

Afin, d'améliorer encore cette variante de réalisation, il est prévu un système anti-rotation du tube-corps autour de son axe. Ce système anti-rotation consiste en une plaque fixée en dessous du tube-corps, et qui comporte deux ailes parallèles à chacun des montants ou des pattes de serrage, et dont la distance entre les faces externes est légèrement plus faible que l'espacement des parois d'appui des pattes de serrage. De plus, les ailes de la plaque du système anti-rotation sont traversées par l'axe du système de blocage. Un autre système anti-rotation consiste en un élément central fixé en dessous du tube-corps, ledit élément central étant traversé par l'axe du système de blocage.

Le fonctionnement avec une colonne équipée d'un air-bag permet d'augmenter la tenue de la colonne dans le sens angulaire avant l'impact du conducteur.

Le dispositif peut aussi fonctionner sans air-bag; c'est alors l'effort dû à l'impact du conducteur sur le volant qui fait glisser le tube-corps et actionne le dispositif.

Le dispositif d'absorption d'énergie pour colonne de direction de véhicule automobile, selon l'invention, présente ainsi l'avantage d'absorber le même effort appliqué au point volant, quelle que soit la position de réglage. D'autre part, ce dispositif conserve le réglage angulaire de la colonne lors d'un choc. Ce dispositif présente également l'avantage d'être actionné lors du déclenchement de l'air-bag, ou par l'effort appliqué au volant lors de l'impact du conducteur avec celui-ci. De plus, l'absorption d'énergie se fait à partir d'un faible déplacement du tube colonne et quelle que soit la position de réglage du volant. Enfin, le système donne un auto-serrage, qui augmente la tenue en position de la colonne de direction dans les sens axial et angulaire.

La présente invention va maintenant être illustrée sans être aucunement limitée par des exemples de réalisation, en référence aux dessins annexés, sur lesquels:
Figure 1 est une vue longitudinale dans le sens axial de la colonne de direction avec un dispositif d'absorption d'énergie selon l'invention.
Figure 2 est une coupe suivant II-II de la Figure 1, le tube-corps étant représenté en vue de dessus extérieure.
Figure 3 est une courbe de variation de l'amortisseur hydraulique représentant la valeur de l'effort de traction en fonction de la vitesse de rétraction.
Figure 4 est une vue schématique de la liaison entre le tube-corps, l'amortisseur et l'organe de manoeuvre.
Figure 5 est une vue analogue à la Figure 1 d'un autre mode de réalisation de l'invention.
Figure 6 est une vue analogue à la Figure 1 d'un autre mode de réalisation de l'invention.
Figure 7 est une coupe transversale suivant VII-VII de la Figure 6.
Figure 8 est une vue analogue à la Figure 7 d'une variante de réalisation.
Figure 9 est une vue partielle en coupe d'une variante de réalisation de la Figure 6.

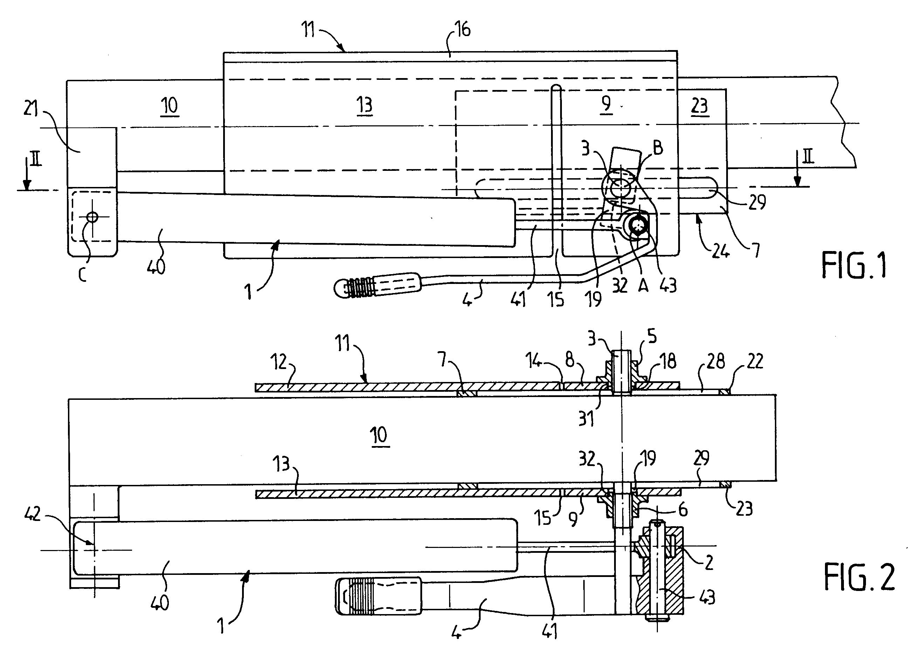

Comme on peut le voir sur les Figures 1 et 2, le dispositif d'absorption d'énergie selon l'invention se monte sur une colonne de direction de véhicule automobile réglable en profondeur et/ou en inclinaison. Cette colonne de direction a l'arbre de direction qui est monté dans un tube-corps 10. Ce tube-corps 10 est lui-même supporté et bloqué sur la carrosserie à la position voulue.

Le dispositif d'absorption d'énergie comporte essentiellement:
- un support 11 qui est lié à la carrosserie et qui reçoit le tube-corps 10,
- un système de blocage du tube-corps 10 dans le support 11, l'axe de blocage étant perpendiculaire à l'axe de la colonne de direction, et le système de blocage agissant au moyen d'un organe de manoeuvre 4,
- un système de réglage en profondeur qui coopère avec le système de blocage,
- un système de réglage en inclinaison qui coopère avec le système de blocage,
- un système d'amortissement disposé entre le tube-corps 10 et le système de blocage, et agissant dans une direction sensiblement parallèle à la colonne de direction,
- le système d'amortissement étant relié:
   . d'une part à l'une des extrémités du tube-corps 10,
   . d'autre part au support 11 par un élément intermédiaire,
- l'élément intermédiaire et le système d'amortissement étant agencés de manière qu'en cas de choc, le système d'amortissement soit tout d'abord neutralisé et que simultanément il entraîne l'élément intermédiaire, qui fournit un serrage additionnel jusqu'à ce que l'effort à absorber par le système d'amortissement soit atteint, le système d'amortissement agissant alors en tant que système d'absorption d'énergie.

Dans le cas des Figures 1, 2 et 4, le système d'amortissement est constitué par un amortisseur hydraulique 1 disposé entre le tube-corps et l'organe de manoeuvre 4, qui agit dans une direction sensiblement parallèle à l'axe de la colonne de direction, et qui est relié:
. d'une part à l'extrémité du tube-corps 10 située à l'opposé du volant du conducteur, et
. d'autre part à l'organe de manoeuvre par une articulation référencée 43.

L'amortisseur hydraulique 1 a la tige 41 de son piston, qui est reliée à l'organe de manoeuvre 4 par l'élément intermédiaire constitué par une biellette 2. Cette biellette 2 est solidaire d'une part de l'organe de manoeuvre 4, et d'autre part s'articule à l'extrémité de la tige 41 du piston par une articulation 43. La distance entre l'articulation 43 et l'axe de blocage constitue un levier autour de l'axe de blocage, qui agit dans le même sens que l'organe de manoeuvre 4, de manière à réaliser le serrage additionnel.

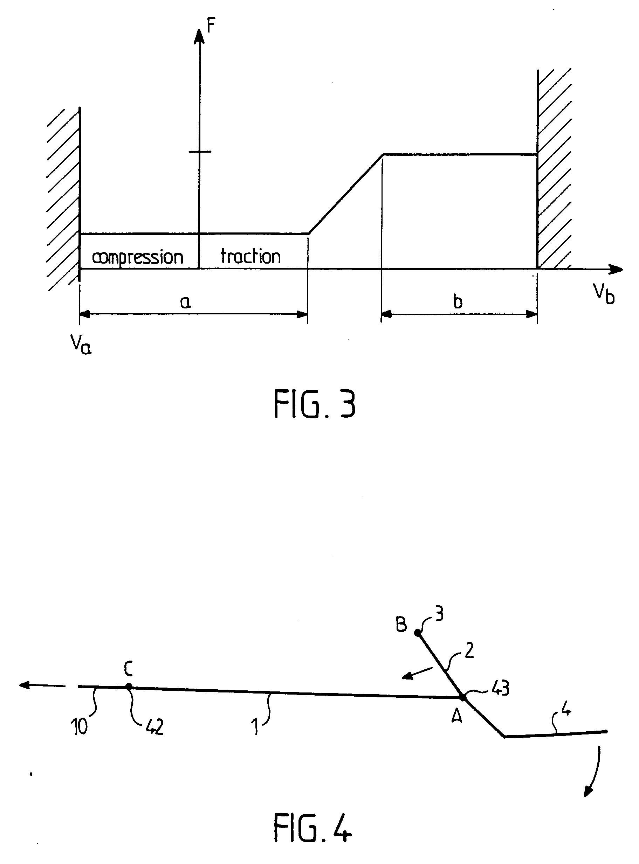

Ceci a été représenté schématiquement sur la Figure 4, où l'axe de blocage est représenté par le point A, tandis que l'articulation 43 est représentée par le point B, la distance A-B constituant le levier qui agit dans le même sens que l'organe de manoeuvre 4.

Comme on peut le voir sur les Figures 1 et 2, le support 11 est constitué par deux montants référencés 12 et 13 qui sont raccordés l'un à l'autre par un élément de raccordement supérieur 16. De plus, sur chacun de ces montants 12 et 13 sont réalisées deux découpes référencées respectivement 14 et 15, de manière à agencer une patte de serrage 8 sur le montant 12 et une patte de serrage 9 sur le montant 13. Enfin, sur chacune des pattes de serrage 8 et 9 sont aménagées des lumières référencées respectivement 18 et 19. Ces lumières 18 et 19 sont destinées à recevoir le système de blocage et à permettre le réglage en inclinaison.

Dans ce mode de réalisation particulier, le tube-corps 10 comporte un carré-renfort 7, qui est constitué par deux montants référencés 22 et 23, reliés l'un à l'autre par un élément de raccordement inférieur 24. Ce carré-renfort 7 est soudé sur le tube-corps 10. De plus, chacun des montants 22 et 23 comporte une lumière référencée 28 et 29. Ces lumières 28 et 29 sont destinées à recevoir le système de blocage, et à permettre le réglage en profondeur de la colonne de direction. Enfin, le tube-corps 10 comporte à l'extrémité située à l'opposé du volant du conducteur un élément-support référencé 21.

Le système de blocage du tube-corps 10 dans le support 11 est constitué par: une vis de serrage 3, deux écrous 5 et 6 à pas inversé, et l'organe de manoeuvre 4.

La vis de serrage 3 traverse les deux pattes de serrage 8 et 9 qui sont aménagées sur chacun des montants 12 et 13 du support 11. La vis de serrage 3 traverse également les deux montants 22 et 23 du carré-renfort 7 appartenant au tube 10 monté à l'intérieur des deux montants 12 et 13 du support 11.

Les deux écrous 5 et 6 à pas inversé sont montés sur chaque extrémité de la vis de serrage 3. Chacun de ces écrous 5 et 6 est monté à l'extérieur respectivement de chacune des pattes de serrage 8 et 9, par rapport auxquelles il est bloqué en rotation. A cet effet, chacun des écrous 5 et 6 possède un carré référencé respectivement 31 et 32, qui vient s'engager dans la lumière correspondante 18 et 19 aménagée sur chacune des pattes de serrage 8 et 9.

L'organe de manoeuvre 4 est monté à l'une des extrémités de la vis de serrage 3, qui dans le cas des Figures 1 et 2 est située à l'extérieur de l'écrou 6. On peut ainsi en tournant l'organe de manoeuvre 4 dans le sens voulu autour de l'axe de blocage qui est celui de la flèche représentée sur les Figures 1 et 4, assurer le blocage désiré en rapprochant et en serrant les pattes de serrage 8 et 9 contre les montants 22 et 23 du carré-renfort 7 appartenant au tube-corps 10.

Le système de réglage en profondeur est constitué par les lumières 28 et 29 qui sont aménagées dans chacun des montants 22 et 23 du carré-renfort 7. Chacune de ces lumières 28 et 29 est sensiblement parallèle à l'axe de la colonne de direction, et a une largeur légèrement plus grande que le diamètre de la vis de serrage 3, de manière que cette vis de serrage 3 puisse traverser et coulisser facilement dans chacune de ces lumières 28 et 29.

Le système de réglage en inclinaison est constitué par les lumières 18 et 19, qui sont aménagées dans chacune des pattes 8 et 9 du support 11. Chacune de ces lumières 18 et 19 a une direction telle que le réglage angulaire de la colonne soit possible. De plus, ces lumières 18 et 19 ont une largeur légèrement plus grande que le carré 31 et 32 de chacun des écrous 5 et 6 correspondants, de manière que la vis de serrage 3 puisse coulisser avec ses écrous 5 et 6 dans chacune de ces lumières 18 et 19, tout en assurant le blocage en rotation de ces écrous 5 et 6.

L'amortisseur hydraulique 1 est disposé à l'extérieur du support 11; dans la réalisation représentée sur les Figures 1, 2 et 4, l'amortisseur hydraulique 1 travaille à la traction. L'amortisseur hydraulique 1 a un corps 40, qui est relié à l'extrémité du tube-corps 10 situé à l'opposé du volant du conducteur. Le corps 40 est ainsi raccordé à l'élément support 21 du tube-corps 10 au moyen d'une articulation 42 du type chape.

L'amortisseur hydraulique 1 a la tige 41 de son piston, qui est reliée à l'organe de manoeuvre 4 par une biellette 2. Cette biellette 2 est d'une part solidaire de l'organe de manoeuvre 4, et d'autre part s'articule à l'extrémité de la tige 41 du piston de l'amortisseur hydraulique 1, par une articulation 43. Dans le cas de la réalisation représentée sur les Figures, cette articulation 43 est une chape.

Sans sortir du cadre de l'invention, le système d'amortissement peut être monté à l'intérieur du support 11, et il peut être agencé pour travailler à la traction ou pour travailler à la compression, qu'il soit monté à l'intérieur ou à l'extérieur du support 11.

Dans une autre variante de réalisation de l'invention qui n'est pas représentée sur les Figures, une plaque est montée de chaque côté du tube-corps 10, avec lequel elle est solidaire. Chacune de ces plaques est disposée en lieu et place de chacun des montants du tube-corps, de manière à ce que chacune des pattes de serrage 8 et 9 du support 11 puisse venir s'appliquer et se serrer sur chacune de ces plaques.

L'amortisseur hydraulique 1 a une courbe d'effort de traction en fonction de la vitesse de rétraction qui est représentée sur la Figure 3. A faible vitesse, c'est-à-dire dans la zone a, qui correspond au réglage de la colonne, il y a un faible effort résistant F. A vitesse importante de rétraction V, qui correspond au moment du choc, l'effort résistant est fixe, quelle que soit cette vitesse de rétraction, celle-ci est représentée dans la zone b.

Les lumières 28 et 29 aménagées sur les montants 22 et 23 du carré-renfort 7 ont une longueur telle qu'elles permettent le réglage en profondeur ainsi qu'une course d'absorption d'énergie. De plus, une butée déclipsable non représentée sur les Figures limite le réglage de la colonne de direction à la course de réglage en profondeur lors du fonctionnement normal.

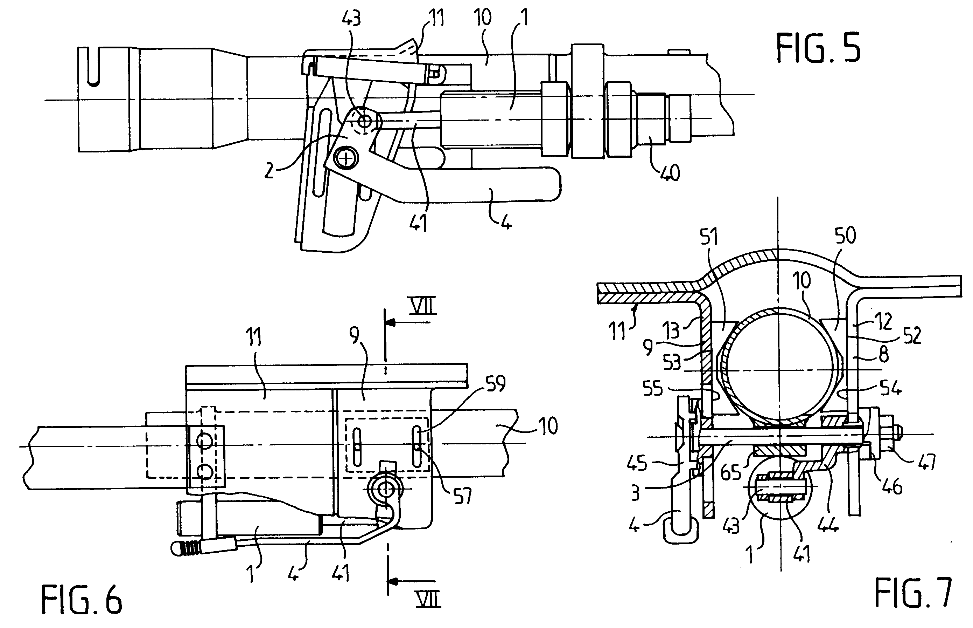

Le dispositif d'absorption d'énergie selon l'invention représenté sur la Figure 5 comporte un amortisseur hydraulique 1, qui travaille à la compression, et qui est disposé à l'extérieur du support 11. Cet amortisseur hydraulique 1 a son corps 40, qui est supporté par le tube-corps 10 du côté du volant du conducteur. L'amortisseur hydraulique 1 a la tige 41 de son piston, qui est reliée à l'organe de manoeuvre 4 par une biellette 2, d'une part solidaire de l'organe de manoeuvre 4, et d'autre part s'articulant à l'extrémité de la tige 41 du piston par une articulation 43. La distance entre l'articulation 43 et l'axe de blocage constitue un levier, qui tourne autour de l'axe de blocage, et qui agit dans le même sens que l'organe de manoeuvre, de manière à fournir le serrage additionnel.

Dans un mode de réalisation de l'invention représenté sur les Figures 6, 7 et 8, le système de blocage du tube-corps 10 dans le support 11 est constitué par une tige de serrage traversant les deux pattes de serrage 8 et 9 aménagées sur chacun des montants 12 et 13 du support 11. Ce système de blocage comporte un système à came 45, qui est monté à l'extérieur de l'un des montants 13, et à l'extrémité de la tige de serrage 3. Un moyen de tenue axiale est monté à l'extérieur de l'autre montant 12, sur l'autre extrémité de la tige de serrage 3. Un organe de manoeuvre 4 est monté sur le système à came 45, de manière qu'en tournant l'organe de manoeuvre 4 dans le sens voulu, autour de l'axe de blocage, on assure par le système à came 45 le blocage désiré.

Dans ce mode de réalisation de l'invention représenté sur les Figures 6 à 8, l'amortisseur hydraulique 1 travaille à la traction et est disposé à l'intérieur du support 11. L'amortisseur hydraulique 1 a son corps 40 qui est relié à l'extrémité du tube-corps 10 située à l'opposé du volant du conducteur. L'amortisseur hydraulique 1 a la tige 41 de son piston, qui est reliée à un levier 44, d'une part monté tournant autour de l'axe de blocage, et d'autre part s'articulant à l'extrémité de la tige 41 du piston par une articulation 43. Le levier 44 est l'élément intermédiaire qui commande le système de serrage additionnel. Dans le cas des Figures, le système de serrage additionnel est un système à came 46, qui est monté à l'extérieur du montant 12, et qui est tenu par un écrou 47.

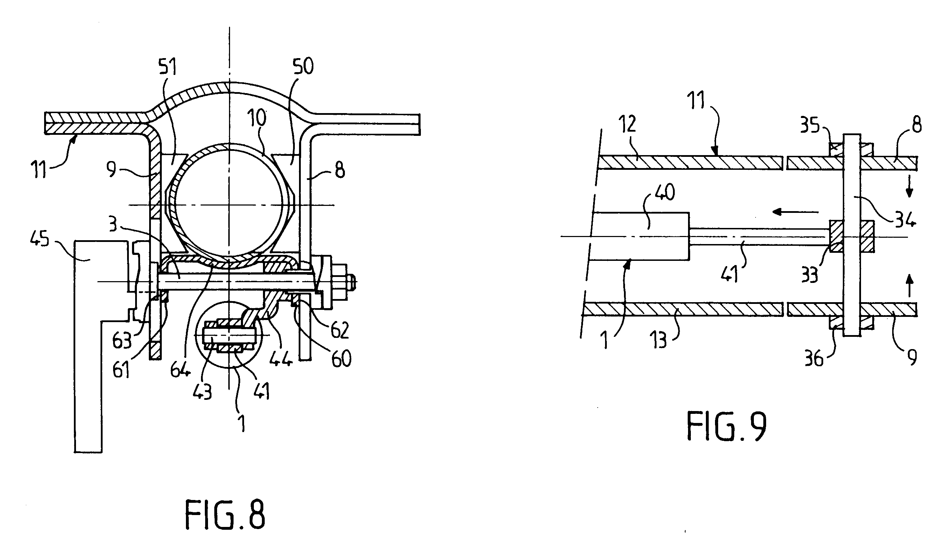

La Figure 9 représente un autre mode de réalisation de l'invention, dans lequel le dispositif d'absorption d'énergie présente un amortisseur hydraulique 1 qui travaille à la traction, et qui est disposé à l'intérieur du support 11. L'amortisseur hydraulique 1 a son corps 40 qui est relié à l'extrémité du tube-corps 10 située à l'opposé du volant du conducteur. Cet amortisseur hydraulique 1 a la tige 41 de son piston, dont l'extrémité est munie d'un trou de passage 33 d'une pièce tubulaire 34, qui est montée dans chacune des pattes de serrage 8 et 9. Cette pièce 34 porte à chacune de ses extrémités filetées un écrou de blocage 35 et 36. La pièce 34 est ainsi la pièce intermédiaire, qui en cas de choc, fournit le serrage additionnel par sa déformation de flexion, qui rapproche les pattes de serrage 8 et 9 l'une de l'autre.

Comme on peut le voir sur les Figures 6, 7 et 8, le dispositif d'absorption d'énergie selon l'invention peut comporter un système de maintien en position du tube-corps 10 qui comporte deux V de serrage 50 et 51. Ces deux V de serrage 50 et 51 sont disposés chacun entre le montant correspondant 12, 13, et le tube-corps 10. Ces deux V 50 et 51 ont leurs deux faces qui s'appliquent contre le tube-corps 10, de manière que lors du réglage en profondeur ou en inclinaison, chacun des V de serrage 50 et 51 suit le mouvement du tube-corps 10, en glissant le long de la paroi d'appui 52 et 53 de la patte de serrage 8 et 9 correspondante.

Ce système de maintien comporte un système de guidage angulaire de chacun des V de serrage 50 et 51 dans le montant 12 et 13 correspondant. Le système de guidage angulaire consiste en des tétons 57 qui sont portés respectivement par les faces externes 54, 55 de chacun des V de serrage 50 et 51. Chacun de ces tétons 57 pénètre et coulisse dans une fente 58 aménagée respectivement dans la patte de serrage 8 et 9 correspondante. Chacune de ces fentes 58 est inclinée par rapport à la colonne de direction, de manière à être sensiblement perpendiculaire à la trajectoire du corps du conducteur lors d'un choc.

Le système de maintien par V de serrage comporte de plus un système anti-rotation du tube-corps 10 autour de son axe. Ce système anti-rotation consiste en une plaque 64, qui est fixée en dessous du tube-corps 10, et qui comporte deux ailes 60 et 61 parallèles chacune à l'un des montants 12 et 13 ou pattes de serrage 8 et 9. Ces ailes 60 et 61 sont agencées de manière que leurs faces externes 62 et 63 aient une distance l'une par rapport à l'autre qui soit légèrement plus faible que l'espacement des parois d'appui 52 et 53 des pattes de serrage 8 et 9. La plaque 64 du système anti-rotation a ses ailes 60 et 61 qui sont traversées par l'axe 3 du système de blocage.

Une autre variante de réalisation du système anti-rotation est représentée sur la Figure 7, et consiste en un élément central 65 qui est fixé en dessous du tube-corps 10, et qui est traversé par l'axe 3 du système de blocage.

Le fonctionnement du dispositif d'absorption d'énergie selon l'invention concerne le réglage de la colonne, et le cas où il y a un choc ou "crash".

En phase de réglage, le dispositif d'absorption d'énergie agit suivant un ensemble de serrage classique vis-écrou. Le déplacement de l'organe de manoeuvre 4 fait bouger le piston de l'amortisseur 1 sous un faible effort comme cela est représenté dans la zone a de la Figure 3. A titre illustratif, l'effort de glissement de la colonne lorsque l'organe de manoeuvre 4 est serré, est de l'ordre de 1000 Newtons dans le sens axial, et de 500 Newtons dans le sens angulaire. D'autre part, les efforts de déplacement de l'organe de manoeuvre 4 sont de l'ordre de 50 Newtons.

En cas de choc, le dispositif d'absorption d'énergie fonctionne comme cela est décrit ci-après.

Le choc, sur le volant du conducteur, avec ou sans air-bag induit un effort suivant l'axe-volant de l'ordre de 4000 Newtons avec une vitesse importante.

La tenue au glissement du système de blocage étant seulement de 1000 Newtons, le tube-corps 10 de la colonne de direction a tendance à glisser en translation dans le support 11, en entraînant avec lui le corps 40 de l'amortisseur hydraulique 1.

La vitesse de déplacement étant importante, le piston de l'amortisseur hydraulique 1 se bloque, c'est-à-dire que l'entre-axe entre les fixations de l'amortisseur 1 reste constant. Autrement dit, la distance entre l'articulation 42 et l'articulation 43 reste constante, l'articulation 42 étant représentée par le point C sur la Figure 4, tandis que l'articulation 43 est représenté par le point A, le point B représentant sur cette Figure 4 l'axe de blocage.

Du fait du système de blocage, le point B est fixe en translation, tandis que le point C est animé d'un mouvement de translation. De ce fait le point A pivote autour du point B, en entraînant le serrage de la vis 3 proportionnellement au déplacement en translation du point C. Le serrage de la vis 3 augmente la tenue du système de blocage, proportionnellement à l'angle de rotation de la vis 3.

Le système de blocage est donc actionné tant que l'effort à absorber par l'amortisseur hydraulique 1 n'est pas atteint, c'est-à-dire tant que l'on n'arrive pas dans la zone b de la Figure 3. Au-delà de cet effort, le piston se met à glisser à effort constant jusqu'au parcours complet de la course réglage plus absorption, c'est-à-dire dans la zone b de la courbe de la Figure 3.

Dans un exemple de réalisation du dispositif d'absorption de l'énergie selon l'invention, l'effort de commande de l'organe de manoeuvre 4 est de 50 Newtons, avec un bras de levier de 70 mm, ce qui donne un couple de commande de 3500 Newtons/mm. Du fait du dispositif de blocage, cela donne une tenue de la colonne de 1000 Newtons. D'autre part, le bras de levier de la biellette 2 est de 15 mm, et la tenue demandée de la colonne de direction est de 5500 Newtons. L'effort à absorber par l'amortisseur hydraulique 1 est donc égal à 3500/15 x 3500/1000, soit 1280 Newtons.

Le mode d'absorption d'énergie se rapportant à une colonne de direction de véhicule automobile, et dont l'arbre de direction est monté dans un tube-corps 10, qui est supporté et bloqué sur la carrosserie à la position voulue se déroule suivant les phases ci-après:
- un effort est induit par le choc suivant l'axe de direction avec une vitesse importante, avec ou sans interposition d'un air-bag,
- cet effort provoque le glissement du tube-corps 10 dans le support 11 lié à la carrosserie, par l'intermédiaire du système de réglage en profondeur qui coopère avec le système de blocage du tube-corps 10 dans le support 11, cet effort étant supérieur à l'effort de serrage fourni par le système de blocage dudit tube-corps 10 dans le support 11,
- le système d'amortissement se déplace, étant constitué par un amortisseur hydraulique relié à une extrémité au tube-corps 10, qui effectue le glissement, et à l'autre extrémité à l'organe de manoeuvre 4 du système de blocage agissant par rotation autour de l'axe de blocage,
- l'organe de manoeuvre tourne alors dans le sens du blocage du fait du déplacement du système d'amortissement durant la fin de la course de réglage en profondeur; pendant ce déplacement, l'entre-axe des extrémités du système d'amortissement reste sensiblement constant,
- l'impact devient plus grand que l'effort à absorber par le système d'amortissement, lequel agit alors pour effectuer le parcours complet de la course d'absorption d'énergie.

Les signes de référence insérés après les caractéristiques techniques mentionnées dans les revendications, ont pour seul but de faciliter la compréhension de ces dernières, et n'en limitent aucunement la portée.

## Revendications

1. Dispositif d'absorption d'énergie pour colonne de direction de véhicule automobile réglable en profondeur, dont l'arbre de direction est monté dans un tube-corps (10) qui est supporté et bloqué sur la carrosserie à la position voulue, ledit dispositif comportant:
- un support (11) lié à la carrosserie et recevant le tube-corps (10),
- un système de blocage par serrage du tube-corps (10) dans le support (11), dont l'axe de blocage est perpendiculaire à l'axe de la colonne de direction, le système de blocage agissant par rotation autour de l'axe de blocage au moyen d'un organe de manoeuvre (4),
- un système de réglage en profondeur coopérant avec le système de blocage,
- un système d'amortissement disposé entre le tube-corps (10) et le système de blocage, et agissant dans une direction sensiblement parallèle à l'axe de la colonne de direction,
caractérisé en ce que le système d'amortissement est relié:
. d'une part à l'une des extrémités du tube-corps (10),
. d'autre part au support (11) par un élément intermédiaire (2, 44, 34),
l'élément intermédiaire (2, 44, 34) et le système d'amortissement étant agencés de manière qu'en cas de choc, le système d'amortissement soit d'abord neutralisé, et que simultanément l'élément intermédiaire (2, 44, 34) fournisse un serrage additionnel au système de blocage, jusqu'à ce que l'effort à absorber par le système d'amortissement soit atteint, le système d'amortissement agissant alors comme moyen d'absorption d'énergie.

2. Dispositif d'absorption d'énergie selon la revendication 1, caractérisé en ce que le dispositif comporte un système de réglage en inclinaison coopérant avec le système de blocage.

3. Dispositif d'absorption d'énergie selon l'une des revendications 1 ou 2, caractérisé en ce que le système d'amortissement est monté à l'extérieur ou à l'intérieur du support (11).

4. Dispositif d'absorption d'énergie selon l'une quelconque des revendications 1 à 3, caractérisé en ce que le système d'amortissement travaille en traction ou en compression.

5. Dispositif d'absorption d'énergie selon l'une quelconque des revendications précédentes, caractérisé en ce que le système d'amortissement est un amortisseur hydraulique.

6. Dispositif d'absorption d'énergie selon l'une quelconque des revendications précédentes, dans lequel le montage de l'arbre de direction dans le tube-corps (10) est réalisé par l'intermédiaire d'un carré-renfort (7), le système de blocage du tube-corps (10) dans le support (11) comprenant:
- une vis de serrage (3) traversant deux pattes de serrage (8, 9) aménagées sur chacun des montants (12, 13) du support (11), et les deux montants (22, 23) du carré-renfort (7) appartenant au tube-corps (10),
- deux écrous (5, 6) à pas inversé montés sur chaque extrémité de la vis de serrage (3) à l'extérieur de chacune des pattes de serrage respectives (8, 9), par rapport auxquelles ils sont bloqués en rotation,
- un organe de manoeuvre (4) monté et solidarisé à l'une des extrémités de la vis de serrage (3),
- de manière qu'en tournant l'organe de manoeuvre (4) dans le sens voulu autour de l'axe de blocage, on assure le blocage désiré

7. Dispositif d'absorption d'énergie selon la revendication 6, caractérisé en ce que le système de réglage en profondeur est constitué par une lumière (28, 29) aménagée dans chacun des montants (22, 23) du carré-renfort (7), chaque lumière (28, 29) étant sensiblement parallèle à l'axe de la colonne de direction et d'une largeur légèrement plus grande que le diamètre de la vis de serrage (3), de manière qu'elle puisse traverser et coulisser facilement dans chacune des lumières (28, 29).

8. Dispositif d'absorption d'énergie selon les revendications 2 et 6, caractérisé en ce que le système de réglage en inclinaison est constitué par une lumière (18, 19) aménagée dans chacune des pattes (8, 9) du support (11) dans une direction légèrement inclinée par rapport à la perpendiculaire à l'axe de la colonne de direction, et d'une largeur légèrement plus grande que le carré (31, 32) de chacun des écrous (5, 6) correspondants, de manière que la vis de serrage (3) puisse coulisser avec ses écrous dans chacune de ces lumières (18, 19), tout en assurant le blocage en rotation des écrous (5, 6).

9. Dispositif d'absorption d'énergie selon la revendication 6, caractérisé en ce que le système de réglage en profondeur est constitué par une lumière aménagée dans chacune des pattes (8, 9) du support (11), et d'une largeur légèrement plus grande que le carré (31, 32) de chacun des écrous (5, 6) correspondants, de manière que la vis de serrage puisse coulisser avec ses écrous (5, 6) dans chacune de ces lumières tout en assurant le blocage en rotation des écrous (5, 6).

10. Dispositif d'absorption d'énergie selon les revendications 2 et 6, caractérisé en ce que le système de réglage en inclinaison est constitué par une lumière aménagée dans chacun des montants (22, 23) du carré-renfort (7), d'une largeur légèrement plus grande que le diamètre de la vis de serrage, de manière qu'elle puisse traverser et coulisser facilement dans chacune de ces lumières.

11. Dispositif d'absorption d'énergie selon la revendication 5, caractérisé en ce que:
- l'amortisseur hydraulique (1) travaille à la traction et est disposé à l'extérieur du support (11),
- le corps (40) de l'amortisseur (1) est relié à l'extrémité du tube-corps (10) située à l'opposé du volant du conducteur,
- la tige (41) du piston de l'amortisseur (1) est reliée à l'organe de manoeuvre (4) par l'élément intermédiaire constituée par une biellette (2), d'une part solidaire de l'organe de manoeuvre (4), et d'autre part s'articulant à l'extrémité de la tige (41) du piston par une articulation (43), la distance entre l'articulation (43) et l'axe de blocage constituant un levier tournant autour de l'axe de blocage, qui agit dans le même sens que l'organe de manoeuvre, de manière à fournir le serrage additionnel.

12. Dispositif d'absorption d'énergie selon la revendication 11, caractérisé en ce que l'amortisseur hydraulique (1) est relié au tube-corps (10) au moyen d'une articulation (42) du type chape.

13. Dispositif d'absorption d'énergie selon l'une des revendications 11 ou 12, caractérisé en ce que l'articulation (43) de l'extrémité de la tige (41) du piston avec la biellette (2) de l'organe de manoeuvre (4) est une chape.

14. Dispositif d'absorption d'énergie selon l'une quelconque des revendications 6 à 13, caractérisé en ce qu'une plaque est montée de chaque côté du tube-corps (10) avec lequel elle est solidaire, chacune de ces plaques étant disposée en lieu et place du carré-renfort (7).

15. Dispositif d'absorption d'énergie selon la revendication 5, caractérisé en ce que:
- l'amortisseur hydraulique (1) travaille à la compression et est disposé à l'extérieur du support (11),
- le corps (40) de l'amortisseur (1) est supporté par le tube-corps (10) du côté du volant du conducteur,
- la tige (41) du piston de l'amortisseur (1) est reliée à l'organe de manoeuvre (4) par une biellette (2), d'une part solidaire de l'organe de manoeuvre (4), et d'autre part s'articulant à l'extrémité de la tige (41) du piston, par une articulation (43), la distance entre l'articulation (43) et l'axe de blocage constituant un levier tournant autour de l'axe de blocage, et qui agit dans le même sens que l'organe de manoeuvre, de manière à fournir le serrage additionnel.

16. Dispositif d'absorption d'énergie selon l'une quelconque des revendications 1 à 5, caractérisé en ce que le système de blocage du tube-corps (10) dans le support (11) comprend une tige de serrage (3) traversant les deux pattes de serrage (8, 9) aménagées sur chacun des montants (12, 13) du support (11), ce système de blocage comportant:
- un système à came (45) monté à l'extérieur de l'un des montants (13), et à l'extrémité de la tige de serrage (3),
- un moyen de tenue axiale monté à l'extérieur de l'autre montant (12), sur l'autre extrémité de la tige de serrage (3),
- un organe de manoeuvre (4) monté sur le système à came (45),
- de manière qu'en tournant l'organe de manoeuvre (4) autour de l'axe de blocage, on assure par le système à came (45) le blocage désiré.

17. Dispositif d'absorption d'énergie selon la revendication 5, caractérisé en ce que:
- l'amortisseur hydraulique (1) travaille à la traction et est disposé à l'intérieur du support (11),
- le corps (40) de l'amortisseur (1) est relié à l'extrémité du tube-corps (10) située à l'opposée du volant du conducteur,
- la tige (41) du piston de l'amortisseur (1), est reliée à un levier (44), d'une part monté tournant autour de l'axe de blocage, et d'autre part s'articulant à l'extrémité de la tige (41) du piston par une articulation (43), le levier (44) étant l'élément intermédiaire qui commande le système de serrage additionnel.

18. Dispositif d'absorption d'énergie selon la revendication 16, caractérisé en ce que le système de serrage additionnel est un système à came (46) monté à l'extérieur du montant (12) et tenu par un écrou (47).

19. Dispositif d'absorption d'énergie selon la revendication 5, caractérisé en ce que:
- l'amortisseur hydraulique travaille à la traction et est disposé à l'intérieur du support (11),
- le corps (40) de l'amortisseur (1) est relié à l'extrémité du tube-corps (10) située à l'opposé du volant du conducteur,
- l'extrémité de la tige (41) du piston de l'amortisseur (1) est munie d'un trou de passage (33) d'une pièce (34) montée dans chacune des pattes de serrage (8, 9) et portant à chacune de ses extrémités filetées un écrou de blocage (35, 36), la pièce (34) étant la pièce intermédiaire, qui en cas de choc, fournit le serrage additionnel par sa déformation de flexion, qui rapproche les pattes de serrage (8, 9) l'une de l'autre.

20. Dispositif d'absorption d'énergie selon l'une quelconque des revendications 1 à 5, caractérisé en ce qu'il comporte deux V de serrage (50, 51) disposés chacun entre l'un des montants (12, 13) du support (11), et le tube-corps (10), avec les deux faces du V s'appliquant contre le tube-corps (10), de manière que lors du réglage en profondeur ou en inclinaison, chacun des V de serrage (50, 51) suit le mouvement du tube-corps (10) en glissant le long de la paroi d'appui (52, 53) de la patte de serrage (8, 9) correspondante.

21. Dispositif d'absorption d'énergie selon la revendication 20, caractérisé en ce qu'il comporte un système de guidage angulaire de chacun des V de serrage (50, 51) dans le montant (12, 13) correspondant.

22. Dispositif d'absorption d'énergie selon la revendication 21, caractérisé en ce que le système de guidage angulaire consiste en un téton (57) porté par la face externe (54, 55) de chacun des V de serrage (50, 51), qui pénètre et coulisse dans une fente (58) aménagée dans la patte de serrage (8, 9) correspondante.

23. Dispositif d'absorption d'énergie selon la revendication 22, caractérisé en ce que chacune des fentes (58) est inclinée par rapport à l'axe de la colonne de direction de manière à être sensiblement perpendiculaire à la trajectoire du corps du conducteur lors d'un choc.

24. Dispositif d'absorption d'énergie selon l'une quelconque des revendications 20 à 23, caractérisé en ce qu'il comporte un système anti-rotation du tube-corps (10) autour de son axe.

25. Dispositif d'absorption d'énergie selon la revendication 24, caractérisé en ce que le système anti-rotation consiste en une plaque (64) fixée en dessous du tube-corps (10), et comportant deux ailes (60, 61) parallèles à chacun des montants (12, 13) ou pattes de serrage (8, 9), dont la distance entre les faces externes (62, 63) est légèrement plus faible que l'espacement des parois d'appui (52, 53) des pattes de serrage (8, 9).

26. Dispositif d'absorption d'énergie selon la revendication 25, caractérisé en ce que la plaque (64) du système anti-rotation a ses ailes (60, 61) qui sont traversées par l'axe (3) du système de blocage.

27. Dispositif d'absorption d'énergie selon la revendication 24, caractérisé en ce que le système anti-rotation consiste en un élément central (65) fixé en dessous du tube-corps (10), ledit élément central (65) étant traversé par l'axe (3) du système de blocage.

## Claims

1. Energy-absorbing device for an automobile vehicle steering column adjustable in depth, the steering shaft of which is mounted in a body-tube (10) that is supported and locked in the desired position on the vehicle body, said device comprising :
- a support (11) fixed to the vehicle body and receiving the body-tube (10),
- a system for locking through tightening the body-tube (10) in the support (11), the locking axis of which is perpendicular to the steering column axis, the locking system acting by rotation about the locking axis by means of an operating device (4),
- a depth adjustment system working with the locking system,
- a damping system arranged between the body-tube (10) and the locking system, and acting in a direction substantially parallel to the steering column axis,
characterized in that the damping system is connected :
- on the one hand, to one of the ends of the body-tube (10),
- and on the other hand to the support (11) by means of an intermediate element (2,44,34),
- the intermediate element (2,44,34) and damping system being designed in such a way that in the event of an impact, the damping system is first of all neutralized and simultaneously drives the intermediate element (2,44,34) which provides supplemental tightening to the locking system, up to a point where the force to be absorbed by the damping system is reached, the damping system then acting as an energy-absorbing means.

2. The energy-absorbing device of claim 1, characterized in that the device comprises an inclination adjustment system working with the locking system.

3. The energy-absorbing device of claim 1 or claim 2, characterized in that the damping system is mounted outside or inside the support (11).

4. The energy-absorbing device of anyone of claims 1 to 3, characterized in that the damping system operates in traction or in compression.

5. The energy-absorbing device of any preceding claim characterized in that the damping system is a hydraulic shcok absorber.

6. The energy-absorbing device of any preceding claim characterized in that the steering shaft is assembled in the body-tube (10) by means of a strengthening square (7), the system for locking the body-tube (10) in the support (11) comprising :
- a tightening bolt (3) traversing two tightening brackets (8,9) provided on each vertical member (12,13) of the support (11), and the two vertical members (22,23) of the strengthening square (7) of the body-tube (10),
- two reverse-pitch nuts (5,6) mounted on each end of the tightening bolt (3) on the outside of each respective tightening bracket (8,9), and with respect to which they are locked in rotation,
- an operating device (4) mounted on and rigidly locked to one end of the tightening bolt (3),
- such that the desired locking is produced by turning the operating device (4) in the desired direction about the locking axis.

7. The energy-absorbing device of claim 6, characterized in that the depth adjustment system comprises an elongated hole (28,29) made in each of the vertical members (22,23) of the strengthening square (7), each elongated hole (28,29) being substantially parallel to the axis of the steering column and slightly wider than the diameter of the tightening bolt (3), such that said tightening bolt can traverse and slide easily in each of the elongated holes (28,29).

8. The energy-absorbing device of any of claims 2 to 6, characterized in that the inclination adjustment system is constituted by an elongated hole (18,19) made in each bracket (8,9) of the support (11) ina direction that is fractionally inclined with respect to the perpendicular to the steering column axis, said elongated hole being fractionally wider than the square (31,32) of each of the corresponding nuts (5,6), such that the tightening bolt (3) can slide with the nuts in each of these elongated holes (18,19) while ensuring the locking in rotation of the nuts (5,6).

9. The energy-absorbing device of claim 6 characterized in that the depth adjustment system is constituted by an elongated hole made in each bracket (8,9) of the support (11), said elongated hole being fractionally wider than the square (31,32) of each of the corresponding nuts (5,6), such that tightening bolt can slide with the nuts (5,6) in each of these elongated holes while ensuring the locking in rotation of the nuts (5,6).

10. The energy-absorbing device of any of claims 2 to 6, characterized in that the inclination adjustment system is constituted by an elongated hole made in each vertical member (22,23) of the strengthening square (7), said elongated hole being fractionally wider than the diameter of the tightening bolt, such that the latter can traverse and slide easily in each of these elongated holes.

11. The energy-absorbing device of claim 5 characterized in that :
- the hydraulic shock absorber (1) works in traction and is arranged outside the support (11),
- the body (40) of the shock absorber (1) is connected to the end of the body-tube (10) furthest from the driver's wheel,
- the piston rod (41) of the shock absorber (1) is connected to the operating device (4) by an intermediate element made up of a link arm (2) that, on the one hand is rigidly locked to the operating device (4), and on the other hand articulates at the end of the piston rod (41) by means of an articulation (43) and the locking axis forming a lever turning about the locking axis, which acts in the same direction at the operating device, in such a way as to provide the supplemental tightening.

12. The energy-absorbing device of claim 11 characterized in that the hydraulic shock absorber (1) is connected to the body-tube (10) by means of a fork-type articulation (42).

13. The energy-absorbing device of claim 11 or claim 12 characterized in that the articulation (43) of the end of the piston rod (41) with the link arm (2) of the operating device (4) is a fork.

14. The energy-absorbing device of any one of claims 6 to 13 characterized in that a plate is mounted on each side of the body-tube (10) with which it is rigidly locked, each plate being arranged in place of the strengthening square (7).

15. The energy-absorbing device of claim 5, characterized in that :
- the hydraulic shock absorber (1) works in compression and is arranged outside the support (11),
- the body (40) of the shock absorber (1) is supported by the body-tube (10) on the driver's wheel side,
- the piston rod (41) of the shock absorber (1) is connected to the operating device (4) by a link arm (2) which, on the one hand, is rigidly locked to the operating device (4), and on the other hand, articulates at the end of the piston rod (41) by means of an articulation (43), the distance between the articulation (43) and the locking axis forming a lever turning about the locking axis, and which acts in the same direction as the operating device, in such a way as to provide the supplemental tightening.

16. The energy-absorbing device of any one of claims 1 to 5 characterized in that the system for locking the body-tube (10) in the support (11) is made up of a tightening rod (3) traversing the two tightening brackets (8,9) provided on each vertical member (12,13) of the support (11), this locking system comprising :
- a cam system (45) mounted on the outside of one of the vertical members (13), and at the end of the tightening rod (3),
- an axial holding means mounted on the outside of the other vertical member (12), on the other hand of the tightening rod (3),
- an operating device (4) is mounted on the cam system (45),
- in such a way that by turning the operating device (4) in the desired direction about the locking axis, the cam system (45) provides the desired locking.

17. The energy-absorbing device of claim 5 characterized in that :
- the hydraulic shock absorber (1) works in traction and is arranged inside the support (11),
- the body (40) of the shock absorber (1) is connected to the end of the body-tube (10) located furthest from the driver's wheel,
- the piston rod (41) of the shock absorber (1) is connected to a lever (44) which, on the one hand, is mounted so as to turn about the locking axis, and on the other hand, articulates at the end of the piston rod (41) by means of an articulation (43), the lever (44) being the intermediate element commanding the supplemental tightening system.

18. The energy-absorbing device of claim 16 characterized in that the supplemental tightening system is a cam system (46) mounted on the outside of the vertical member (12) and held by a nut (47).

19. The energy-absorbing device of claim 5 characterized in that :
- the hydraulic shock absorber works in traction and is arranged inside the support (11)
- the body (40) of the shock absorber (1) is connected to the end of the body-tube (10) located furthest from the driver's wheel,
- the end of the shock absorber's piston rod (41) is provided with a passage hole (33) for a part (34) mounted in each tightening bracket (8,9), said part carrying a nut (35,36) at each of its threaded ends, said part (34) being the intermediate element, which in the event of an impact, provides the supplemental tightening by its deformation under bending, which brings the tightening brackets (8,9) closer to each other.

20. The energy-absorbing device of any of claims 1 to 5, characterized in that it comprises two tightening Vs (50,51) each arranged between one of the vertical members (12,13) of the support (11), and the body-tube (10), with the two faces of the V bearing against the body-tube, in such a way at the time a depth or inclination adjustment is made, each V (50,51) follows the movement of the body tube (10) by sliding along the bearing wall (52,53) of the corresponding tightening bracket (8,9).

21. The energy-absorbing device of claim 20, characterized in that it comprises an angular guide system for each tightening V (50,51) in the corresponding vertical member (12,13).

22. The energy-absorbing device of claim 21 characterized in that the angular guide system is made up of a pin (57) carried by the outer face (54,55) of each tightening V (50,51) which penetrates and slides in a slot (58) provided in the corresponding tightening bracket (8,9).

23. The energy-absorbing device of claim 22, characterized in that each slot (58) is inclined with respect to the steering column axis in such a way as to be substantially perpendicular to the trajectory of the driver's body at the time of an impact.

24. The energy-absorbing device of any one of claims 20 to 23 characterized in that it comprises an anti-rotation system that prevents the body-tube (10) rotating about its axis.

25. The energy-absorbing device of claim 24, characterized in that the anti-rotation system consists of a plate (64) fixed below the body-tube (10) and comprises two wings (60,61) arranged parallel to each vertical member (12,13) or tightening bracket (8,9), the distance between the outer faces (62,63) of said wings being slightly less than the spacing of the bearing walls (52,53) of the tightening brackets (8,9).

26. The energy-absorbing device of claim 25, characterized in that the wings (60,61) of the plate (64) of the anti-rotation system are traversed by the axis (3) of the locking system.

27. The energy-absorbing device of claim 24, characterized in that the anti-rotation consists of a central element (65) fixed below the body-tube (10), said central element (65) being traversed by the axis (3) of the locking system.

## Patentansprüche

1. Energieabsorptionsvorrichtung für eine in der Höhe regelbare Lenksäule eines Automobils, wobei die Lenkwelle in einem Rohrkörper (10) montiert ist, der auf der Karosserie in der gewünschten Position abgestützt und blockiert ist, umfassend:
- ein Stützteil (11), das mit der Karosserie verbunden ist und den Rohrkörper (10) aufnimmt,
- ein Blockiersystem, um den Rohrkörper (10) im Stützteil (11) durch Klemmen zu blockieren, wobei die Blockierachse senkrecht zur Achse der Lenksäule gerichtet ist und das Blockiersystem durch Drehen eines Betätigungsteils (4) um die Achse des Blockiersystems betätigbar ist,
- ein mit dem Blockiersystem zusammenwirkendes System der Höhenregelung,
- ein Dämpfungssystem, das zwischen dem Rohrteil (10) und dem Blockiersystem angeordnet ist und in einer im wesentlichen parallel zur Achse der Lenksäule verlaufenden Richtung wirksam ist,
dadurch gekennzeichnet, daß das Dämpfungssystem einerseits mit einem Ende des Rohrkörpers (10) und andererseits mit dem Stützteil (11) über ein Zwischenelement (2, 44, 34) verbunden ist, wobei das Zwischenelement (2, 44, 34) und das Dämpfungssystem derart angeordnet sind, daß im Falle eines Zusammenstoßes das Dämpfungssystem zunächst neutralisiert ist und daß gleichzeitig das Zwischenelement (2, 44, 34) eine zum Blockiersystem zusätzliche Verriegelung bildet, bis die vom Dämpfungssystem zu absorbierende Kraft erreicht ist, woraufhin dann das Dämpfungssystem als Einrichtung zur Energieabsorption wirkt.

2. Energieabsorptionsvorrichtung nach Anspruch1, dadurch gekennzeichnet, daß sie ein mit dem Blockiersystem zusammenwirkendes System der Neigungsregelung enthält.

3. Energieabsorptionsvorrichtung nach Anspruch 1 oder 2, dadurch gekennzeichnet, daß das Dämpfungssystem außerhalb oder innerhalb des Stützteils (11) montiert ist.

4. Energieabsorptionsvorrichtung nach einem der Ansprüche 1 bis 3, dadurch gekennzeichnet, daß das Dämpfungssystem auf Zug oder Druck arbeitet.

5. Energieabsorptionsvorrichtung nach einem der vorhergehenden Ansprüche, dadurch gekennzeichnet, daß das Dämpfungssystem ein Hydraulik-Stoßdämpfer ist.

6. Energieabsorptionsvorrichtung nach einem der vorhergehenden Ansprüche, bei welcher die Montage der Lenkwelle im Rohrkörper (10) mit Hilfe einer Vierkant-Versteifung (7) realisiert ist, wobei das Blockiersystem des Rohrkörpers (10) im Stützteil (11) umfaßt:
- eine Klemmschraube (3), welche zwei Klemmbacken (8, 9), die an jedem der Schenkel (12, 13) des Stützteils (11) angeordnet sind, ebenso durchsetzt wie die beiden Schenkel (22, 23) der zum Rohrkörper (10) gehörenden Versteifung (7),
- zwei Schraubmuttern (5, 6) mit negativer Steigung, die auf jedem Ende der Klemmschraube (3) außerhalb der jeweiligen Klemmbacken (8, 9) montiert sind und durch die diese gegen eine Rotation blockiert sind,
- ein Betätigungsteil (4), das an einem der Enden der Klemmschraube (3) montiert und befestigt ist,
- derart, daß man durch Verdrehen des Betätigungsteils (4) im gewünschten Sinn um die Blockierachse die gewünschte Blockierung bewerkstelligt.

7. Energieabsorptionsvorrichtung nach Anspruch 6, dadurch gekennzeichnet, daß das System der Höhenregulierung gebildet ist durch ein Langloch (28, 29) in jedem der Schenkel (22, 23) der Verstärkung (7), wobei jedes Langloch (28, 29) im wesentlichen parallel zur Achse der Lenksäule verläuft und eine Breite aufweist, die geringfügig größer ist als der Durchmesser der Klemmschraube (3), derart, daß sie in jedem Langloch (28,29) leicht durchqueren und gleiten kann.

8. Energieabsorptionsvorrichtung nach den Ansprüchen 2 und 6, dadurch gekennzeichnet, daß das System zur Neigungsregelung durch ein Langloch (18, 19) in jedem Backen (8, 9) des Stützteils (11) gebildet ist, das in einer Richtung verläuft, die leicht gegenüber der Senkrechten zur Achse der Lenksäule geneigt ist und mit einer Breite, die geringfügig größer ist als der Vierkant (31, 32) jeder der entsprechenden Schraubenmuttern (5, 6), derart, daß die Klemmschraube (3) mit ihren Schraubmuttern in jedem der Langlöcher (18, 19) unter Sicherung der Drehblockierung der Schraubenmuttern (5, 6) gleiten kann.

9. Energieabsorptionsvorrichtung nach Anspruch 6, dadurch gekennzeichnet, daß das System zur Höhenregelung aus einem Langloch in jedem der Backen (8, 9) des Stützteils (11) besteht, das eine Breite aufweist, die etwas größer ist als der Vierkant (31, 32) jeder der entsprechenden Schraubenmuttern (5, 6), derart, daß die Klemmschraube mit ihren Schraubenmuttern (5, 6) in jedem Langloch unter Sicherstellung der Rotationsblockierung der Schraubenmuttern (5, 6) gleiten kann.

10. Energieabsorptionsvorrichtung nach den Ansprüchen 2 und 6, dadurch gekennzeichnet, daß das System zur Neigungsregelung aus einem Langloch in jedem der Schenkel (22, 23) der Vierkant-Verstärkung (7) besteht, wobei das Langloch eine Breite aufweist, die etwas größe ist als der Durchmesser der Klemmschraube, derart, daß sie leicht in jedem der Langlöcher gleiten kann.

11. Energieabsorptionsvorrichtung nach Anspruch 5, dadurch gekennzeichnet, daß:
- der Hydraulikstoßdämpfer (1) auf Zug arbeitet und außerhalb des Stützteils (11) angeordnet ist,
- das Gehäuse (40) des Stoßdämpfers (1) mit dem Ende des Rohrkörpers (10) verbunden ist, das dem Fahrersitz abgelegen ist,
- die Stange (41) des Kolbens des Stoßdämpfers (1) mit dem Betätigungsteil (4) über ein Zwischenelement verbunden ist, das gebildet ist durch einen Schwingarm (2), der einerseits fest mit dem Betätigungsteil (4) verbunden ist und andererseits über ein Gelenk (43) schwenkbar am Ende der Stange (41) des Kolbens angelenkt ist, wobei die Distanz zwischen dem Gelenk (43) und der Blockierachse einen Hebel bildet, der sich um die Blockierachse dreht und der im gleichen Sinn wie das Betätigungsteil wirkt, derart, daß eine zusätzliche Verklemmung erzielt wird.

12. Energieabsorptionsvorrichtung nach Anspruch 11, dadurch gekennzeichnet, daß der Hydraulikstoßdämpfer (1) mit dem Rohrkörper (10) mit Hilfe eines Gelenks (42) vom Gabeltyp ist.

13. Energieabsorptionsvorrichtung nach einem der Ansprüche 11 oder 12, dadurch gekennzeichnet, daß die Gelenkverbindung (43) des Endes der Stange (41) des Kolbens mit dem Schwingarm (2) des Betätigungsteils (4) ein Gabelgelenk ist.

14. Energieabsorptionsvorrichtung nach einem der Ansprüche 6 bis 13, dadurch gekennzeichnet, daß auf jeder Seite des Rohrkörpers (10) eine mit diesem fest verbundene Platte montiert ist, wobei jede dieser Platten anstelle der Vierkant-Verstärkung (7) angeordnet ist.

15. Energieabsorptionsvorrichtung nach Anspruch 5, dadurch gekennzeichnet, daß:
- der Hydraulikstoßdämpfer (1) auf Kompression arbeitet und außerhalb des Stützteils (11) angeordnet ist,
- das Gehäuse (40) des Stoßdämpfers (1) auf der dem Fahrersitz zugekehrten Seite des Rohrkörpers (10) abgestützt ist,
- die Stange (41) des Kolbens des Stoßdämpfers (1) mit dem Betätigungsteil (4) durch einen Schwingarm (2) verbunden ist, der einesteils fest mit dem Betätigungsteil (4) verbunden ist und sich andererseits um das Ende der Stange (41) des Kolbens über ein Gelenk (43) schwenken kann, wobei die Distanz zwischen dem Gelenk (43) und der Blockierachse einen Hebel bildet, der sich um die Blockierachse dreht und der im gleichen Sinn wirkt wie das Betätigungsteil, derart, daß eine zusätzliche Verriegelung gebildet ist.

16. Energieabsorptionsvorrichtung nach einem der Ansprüche 1 bis 5, dadurch gekennzeichnet, daß das Blockiersystem des Rohrkörpers (10) im Stützteil (11) eine Klemmspindel (3) umfaßt, welche die beiden Klemmbacken (8, 9), die an jedem der Schenkel (12, 13) des Stützteils (11) angeordnet sind, durchsetzt, wobei das Blockiersystem umfaßt:
- ein Nockensystem (45), welches auf der Außenseite eines Schenkels (13) sowie am Ende der Klemmspindel (3) befestigt ist,
- ein Axialrückhalteglied, das auf der Außenseite des anderen Schenkels (12) am anderen Ende der Klemmspindel (3) montiert ist,
- ein Betätigungsteil (4), das auf dem Noppensystem (45) montiert ist,
derart, daß beim Drehen des Betätigungsteils (4) um die Blockierachse kierachse man über das Nockensystem (45) die gewünschte Blockierung sichert.

17. Energieabsorptionsvorrichtung nach Anspruch 5, dadurch gekennzeichnet, daß:
- der Hydraulikstoßdämpfer (1) auf Zug arbeitet und außerhalb des Stützteils (11) angeordnet ist,
- das Gehäuse (40) des Stoßdämpfers (1) mit demjenigen Ende des Rohrkörpers (10) verbunden ist, das dem Fahrersitz abgelegen ist,
- die Stange (41) des Kolbens des Stoßdämpfers (1) mit einem Hebel (44) verbunden ist, der einerseits drehbar um die Blockierachse gelagert ist und andererseits am Ende der Stange (41) des Kolbens durch ein Gelenk (43) angelenkt ist, wobei der Hebel (44) das Zwischenelement ist, welches das zusätzliche Klemmsystem steuert.

18. Energieabsorptionsvorrichtung nach Anspruch 16, dadurch gekennzeichnet, daß das zusätzliche Verriegelungssystem ein Nockensystem (46) ist, welches an der Außenseite des Schenkels (12) montiert und durch eine Mutter (47) gehaltert ist.

19. Energieabsorptionsvorrichtung nach Anspruch 5, dadurch gekennzeichnet, daß:
- der hydraulische Stoßdämpfer auf Zug arbeitet und innerhalb des Stützteils (11) angeordnet ist,
- das Gehäuse (40) des Stoßdämpfers (1) mit dem Ende des Rohrkörpers (10) verbunden ist, das vom Lenkrad abgewandt ist,
- das Ende der Stange (41) des Kolbens des Stoßdämpfers (1) mit einer Durchgangsöffnung (33) für ein Teil (34) versehen ist, das an beiden Klemmbacken (8, 9) montiert ist und an jeder seiner mit Außengewinde versehenen Enden eine Blockiermutter (35, 36) trägt, wobei das Teil (34) das Zwischenteil ist, das im Falle eines Zusammenstoßes die zusätzliche Verklemmung infolge seiner Biegedeformation liefert, durch welche die Klemmbacken (8, 9) aneinander angenähert werden.

20. Energieabsorptionsvorrichtung nach einem der Ansprüche 1 bis 5, dadurch gekennzeichnet, daß sie zwei V-förmige Klemmprismen (50,51) umfaßt, die jeweils zwischen einem der Schenkel (12, 13) des Stützteils (11) und dem Rohrkörper (10) angeordnet sind, wobei die beiden Flächen des Prismas am Rohrkörper (10) anliegen, derart, daß bei der Höhenregelung oder der Neigungsregelung jedes der Klemmprismen (50, 51) der Bewegung des Rohrkörpers (10) folgt, indem es entlang der Abstützwand (52, 53) des entsprechenden Klemmbackens (8, 9) gleitet.

21. Energieabsorptionsvorrichtung nach Anspruch 20, dadurch gekennzeichnet, daß sie ein System zur Winkelführung jedes Klemmprismas (50, 51) in dem entsprechenden Schenkel (12, 13) umfaßt.

22. Energieabsorptionsvorrichtung nach Anspruch 21, dadurch gekennzeichnet, daß das System der Winkelführung aus einem Ansatz (57) besteht, der von der Außenfläche (54, 55) jedes Klemmprismas (50, 51) getragen wird und der in einen Schlitz (58) des entsprechenden Klemmbackens (8, 9) einragt und darin gleitet.

23. Energieabsorptionsvorrichtung nach Anspruch 22, dadurch gekennzeichnet, daß jeder Schlitz (58) bezüglich der Achse der Lenksäule geneigt ist, derart, daß er im wesentlichen senkrecht zur Flugbahn des Fahrerkörpers bei einem Zusammenstoß gerichtet ist.

24. Energieabsorptionsvorrichtung nach einem der Ansprüche 20 bis 23, dadurch gekennzeichnet, daß sie ein Antirotationssystem für den Rohrkörper (10) um seine Achse umfaßt.

25. Energieabsorptionsvorrichtung nach Anspruch 24, dadurch gekennzeichnet, daß das Antirotationssystem aus einer Platte (64) besteht, die unterhalb des Rohrkörpers (10) fixiert ist und zwei Flügel (60, 61) umfaßt, die parallel zu jedem der Schenkel (12,13) oder der Klemmbacken (8,9) verlaufen, wobei der Abstand zwischen den Außenflächen (62, 63) etwas geringer ist als der Abstand der Abstützwände (52, 53) der Klemmbacken (8, 9).

26. Energieabsorptionsvorrichtung nach Anspruch 25, dadurch gekennzeichnet, daß die Platte (64) des Antirotationssystems Flügel (60, 61) aufweist, die von der Achse (3) des Blockiersystems durchsetzt sind.

27. Energieabsorptionsvorrichtung nach Anspruch 24, dadurch gekennzeichnet, daß das Antirotationssystem aus einem Zentralelement (65) besteht, welches unterhalb des Rohrkörpers (10) fixiert ist, wobei das Zentralelement (65) von der Achse (3) des Blockiersystems durchsetzt ist.
